# EUROPEAN PATENT APPLICATION

(11) **EP 3 506 448 A1**
(43) Date of publication of application: **03.07.2019**
(21) Application number: 17460084.1
(22) Date of filing: 28.12.2017
(51) Int. Cl.: H02J 3/38, H02S 50/10

(54) **METHOD AND SYSTEM FOR MONITORING A PHOTOVOLTAIC PLANT TO DETERMINE A FAULT CONDITION**

(71) Applicant: ABB Schweiz AG, 5400 Baden (CH)
(72) Inventor: The designation of the inventor has not yet been filed
(74) Representative: Chochorowska-Winiarska, Krystyna

(57) **Abstract**

A method for monitoring a photovoltaic (PV) plant condition, wherein the PV plant (100) comprises an array (110) of PV modules (111) connected to an inverter (120) comprising a current-voltage measurement subsystem (121), a DC-AC conversion circuit (122) for providing AC power output to a power grid (150) and a control module (123) configured to control operation of the inverter (120); the method characterized by: collecting (201) a recently measured IV curve from the measurement subsystem (121) of the inverter (120); and analyzing (202) the recently measured IV curve to determine the condition of operation of the PV plant.

## Description

### TECHNICAL FIELD

The present invention relates to photovoltaic (PV) plants, in particular to monitoring condition of the PV plant.

### BACKGROUND

A photovoltaic (PV) plant, also called a photovoltaic power station, is a system of photovoltaic modules configured for supplying power into the electricity grid. The plant may comprise thousands of PV modules. The PV modules generate direct current (DC), which is converted to alternating current (AC) by inverters. Depending on the PV plant configuration, a centralized inverter can be employed for the whole field, or the field can be arranged in strings and separate string inverters can be provided for each string.

The efficiency of the process is controlled by so-called maximum power point trackers (MPPT) that keep the PV modules close to their peak power point. The efficiency of power transfer from the PV module depends on the amount of sunlight falling on the module and the electrical characteristics of the load. As the amount of sunlight varies, the load characteristic that gives the highest power transfer efficiency changes. The MPPT tracker operation is based on a current-voltage curve (also called an IV curve or an I-V curve), which is generated by varying voltage in a range of interest and storing current-voltage pairs for each measurement point. The MPPT system samples the output of the PV cell and applies a load that is necessary to obtain maximum power for the current environmental conditions.

In order to control the efficiency of the PV plant, it is essential to monitor the plant condition. The plant condition is typically monitored by special, additional hardware modules, such as data acquisition modules, specialized sensors, etc.

There is a need to provide a method and system for remote monitoring of PV plant condition that would not require additional hardware and could make efficient use of hardware modules typically present in a PV plant.

### SUMMARY

There is disclosed a method for monitoring a photovoltaic (PV) plant condition, wherein the PV plant comprises an array of PV modules connected to an inverter comprising a current-voltage measurement subsystem, a DC-AC conversion circuit for providing AC power output to a power grid and a control module configured to control operation of the inverter; the method characterized by: collecting a recently measured IV curve from the measurement subsystem of the inverter; and analyzing the recently measured IV curve to determine the condition of operation of the PV plant.

Analyzing may comprise matching the recently measured IV curve with predetermined fault operation IV curves to determine a type of fault.

The type of fault to be determined may comprise at least one of: bypass diode short circuit, module short circuit, reversed bypass diode, partial shading or soiling, change in series resistance and change in shunt resistance.

Analyzing the recently measured IV curve may relate to at least one of: a single PV module, a string of PV modules, or all PV modules of the PV plant.

The method may further comprise normalizing the recently measured IV curves to reference ambient environment conditions.

The method may comprise comprising collecting and analyzing the recently measured IV curve in a diagnostic module within the inverter.

The method may comprise collecting and analyzing the recently measured IV curve in a diagnostic module remote with respect to the inverter.

There is also disclosed a system for monitoring a photovoltaic (PV) plant condition, wherein the PV plant comprises an array of PV modules connected to an inverter comprising a current-voltage measurement subsystem, a DC-AC conversion circuit for providing AC power output to a power grid and a control module configured to control operation of the inverter; the system further comprising a diagnostic module configured to: collect a recently measured IV curve from the measurement subsystem of the inverter; and analyze the recently measured IV curve to determine the condition of operation of the PV plant.

The diagnostic module may be embedded within the inverter.

The diagnostic module may be remote with respect to the inverter and comprises a communication interface configured to collect the recently measured IV curve data from a communication interface of the inverter.

In the present invention, information is collected from the inverter. The detail of information collected depends on the topology of the PV plant and the type of inverter used, in particular the number of MPPT (Maximum Power Point Tracking) channels of that inverter. If a single string is connected to the channel, information can be obtained for the string; if a plurality of parallel strings are connected (via a combiner box), information can be collected for the set of strings.

### BRIEF DESCRIPTION OF THE FIGURES

Further features and advantages of the present invention will be apparent in the following description of a non-limitative embodiment with reference to the figures in the accompanying drawings, wherein:
Fig. 1 shows an embodiment of a system for measuring condition of a photovoltaic plant;
Fig. 2 shows a set of reference and fault operation IV curves;
Fig. 3 shows an alternative embodiment of the system for measuring condition of a photovoltaic plant;
Fig. 4 shows steps of a method for measuring condition of a photovoltaic plant.

### DETAILED DESCRIPTION

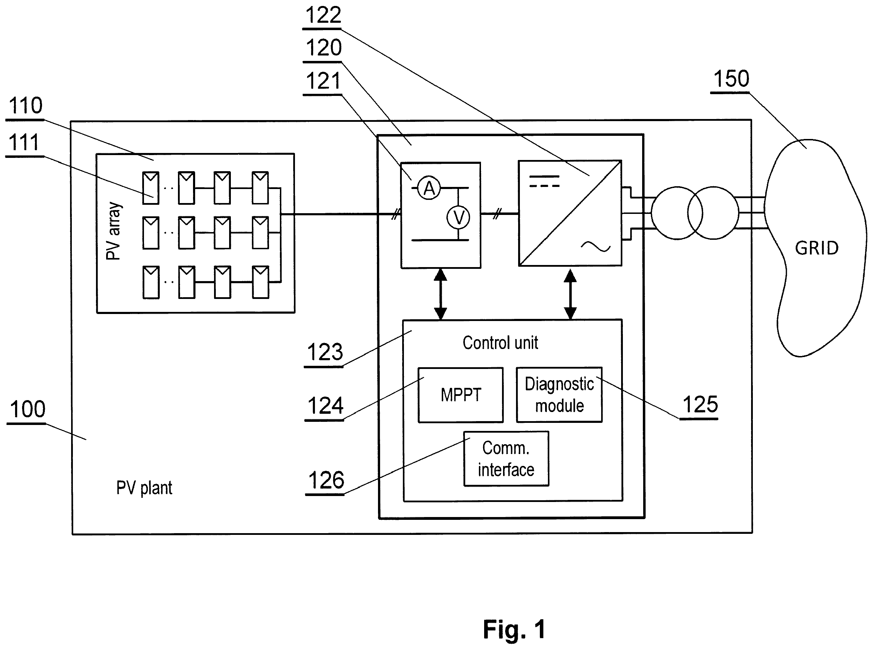

Fig. 1 shows an embodiment of system for measuring condition of a photovoltaic plant.

A photovoltaic plant (PV plant) 100 comprises a PV array 110 with plurality of PV modules 111. The PV modules can be arranged in various ways, as known in the art. For example, the PV modules can be connected in series to form strings which are connected in parallel to form the PV array 110.

An inverter 120 is provided to convert, using a DC-AC conversion circuit 122, the direct current (DC) generated by the PV modules to alternating current (AC) to be supplied to a power grid 150. The type of the inverter used depends on the configuration of the PV plant 100 - a centralized inverter can be employed for the whole field, or separate string inverters can be provided for each string or a plurality of strings connected in parallel to that inverter. Alternatively, an inverter with multiple MPPT channels can be used; having each channel connected with a string or a plurality of strings.

The inverter 120 comprises an measurement subsystem 121 configured to sweep across a voltage range and obtain current measurement points to generate an IV curve.

The inverter 120 further comprises a control unit 123 configured to control the operation of the conversion circuit 122, in particular having an MPPT module 124 to control the inverter to operate at the peak power point.

In addition, the inverter 120 comprises a communication interface 126 for communicating with external units, via a known wired or wireless communication system.

The functionality of the modules described so far corresponds to a functionality of a typical prior art inverter.

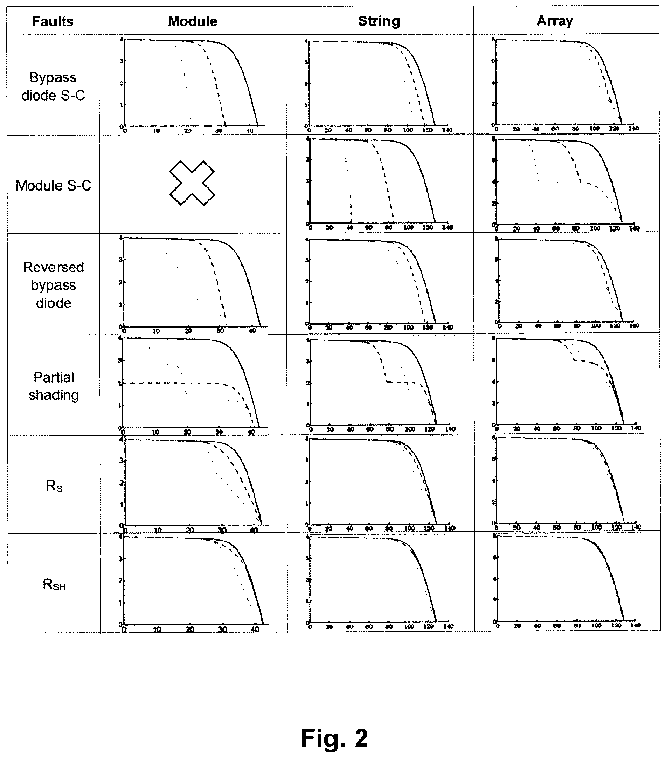

In addition to the above functionality, the control unit 123 of the inverter 120 further comprises a diagnostic module 125 configured to analyze the IV curves obtained by the IV curve generator 121 to monitor the PV plant condition parameters. The obtained curves are analyzed, by comparing the recently measured IV curve with a reference curve, to identify symptoms of PV module faults. If the recently measured IV curve differs from the reference curve, its shape can be analyzed to determine the type of fault, as discussed with reference to Fig. 2.

Fig. 2 shows a set of reference and fault operation IV curves for various fault conditions in a single PV module, PV string or PV array. The solid line curve represents a reference curve for a properly operating module, string or the whole array respectively. The dotted lines show examples of faulty operation IV curves, with progressing severity, when a particular fault type occurs for the module, string or the whole filed, such as a bypass diode short circuit, module short circuit, reversed bypass diode, partial shading (or soiling), change in series resistance and change in shunt resistance. The nature and origin of these fault operation curves is described in details in a publication "Detection et localization de defauts pour un systeme PV" by Long Bun, in Electric power. Universite de Grenoble, 2011 (<NNT : 2011GRENT111>. <tel-00647189v2>).

These faulty operation IV curves can be stored in the memory of the diagnostic module 125 as sets of equations identifying the curve shape, or as tables identifying the curve shapes by IV points. A single curve can be stored for a particular fault type or a plurality of curves can be stored.

The comparison of the recently measured IV curve with the fault operation IV curves can be done by finding a closest match, for example using regression method, polynomial fit, or by any suitable algorithm for curve shape analysis, or by another means, such as a neural network trained to determine the fault type.

The reference and fault operation IV curves can be stored for reference ambient environment conditions, such as temperature equal to 23°C and irradiance of 1000 W/m². Before comparing the recently measured IV curve, it can be normalized (preferably, at the inverter 120) to the reference ambient conditions, depending on the difference between the present ambient environment conditions and the reference conditions (using normalization equations, which are known in the art).

The results of the analysis can be output from the inverter via a communication interface 126 and sent to a remote location, such as a remote plant monitoring server.

In addition to the system described above, additional sensors can be installed in the system or inverter, such as temperature, irradiance or humidity sensors, to improve the accuracy by providing environmental data more accurate than data provided by external services.

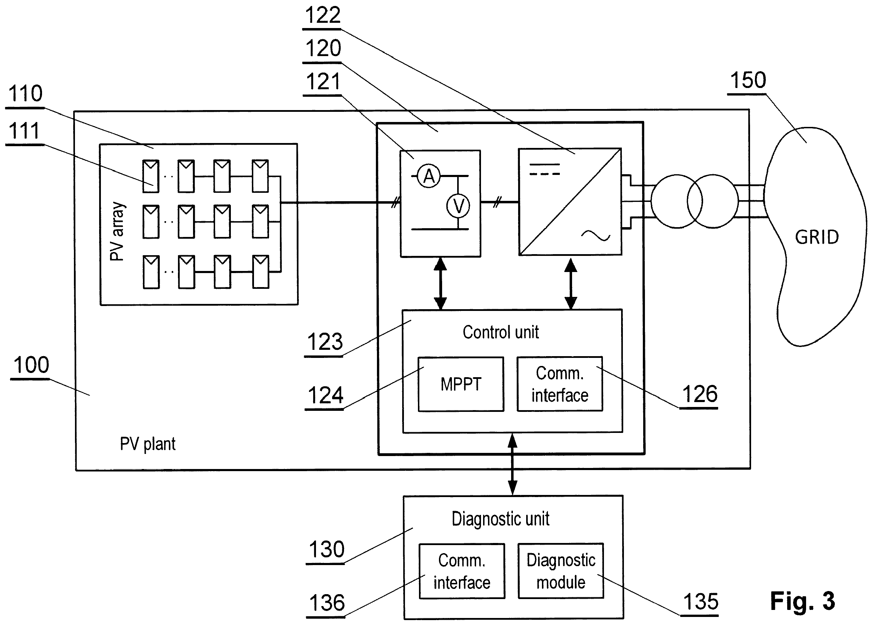

Fig. 3 shows an alternative embodiment of the system, with a separate diagnostic unit 130, comprising a communication interface 136 configured to communicate (in order to collect IV curve data) with the communication interface 126 of the control unit 123 of the inverter 120. The diagnostic unit 130 may be considered as one of the elements of the PV plant 100 or as an element separate with respect to the PV plant 100. The diagnostic unit 130 comprises a diagnostic module 135 having the functionality of the diagnostic module 125 described with reference to the embodiment of Fig. 1. Therefore, the diagnostic functionality is realized outside of the inverter 120, based on IV curve data collected from the inverter via its communication interface 125. The diagnostic unit 130 allows remote storage, calculations and analysis of measurement data. It does not utilize the memory nor processing power of the inverter, and can be implemented with inverters that do not have the available memory or processing resources to implement the system of Fig. 1.

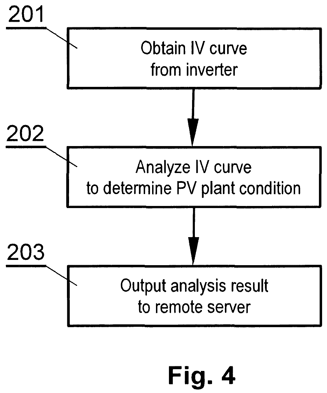

Fig. 4 shows schematically the steps of the method for monitoring the PV plant condition, operated by the diagnostic module 125, 135.

The method starts in step 201 by collecting a recently measured IV curve data points from the measurement subsystem 121 of the inverter 120. The IV curve is obtained by performing current and voltage measurements at the inverter 120. This step may be invoked periodically, for example once every hour. Alternatively, this step may be invoked upon receiving a command from a remote server, such as a plant condition monitoring system. The IV curves are preferably measured over a relatively short period, such as a few seconds, in order to be invariant to changing environmental conditions (as opposed to IV curves measured over a long period, such as a few hours). Eventually, the obtained IV curve can be normalized to standard environmental conditions, to facilitate further analysis.

The IV curve collected in step 201 is then analyzed in step 202 to determine the condition of operation of the PV plant. The analysis may include determining whether the recently measured IV curve differs from a reference curve and/or matching the recently measured IV curve with predetermined fault operation IV curves to determine the type of fault.

The result of the analysis is then output in step 203 to the remote plant condition monitoring server.

The technical concepts presented above can be implemented in a variety of ways. Consequently, the invention and its embodiments are not restricted to the above examples, but can vary within the scope of the claims.

## Claims

1. A method for monitoring a photovoltaic (PV) plant condition, wherein the PV plant (100) comprises an array (110) of PV modules (111) connected to an inverter (120) comprising a current-voltage measurement subsystem (121), a DC-AC conversion circuit (122) for providing AC power output to a power grid (150) and a control module (123) configured to control operation of the inverter (120); the method **characterized by**:
- collecting (201) a recently measured IV curve from the measurement subsystem (121) of the inverter (120); and
- analyzing (202) the recently measured IV curve to determine the condition of operation of the PV plant.

2. The method according to claim 1, wherein analyzing (202) comprises matching the recently measured IV curve with predetermined fault operation IV curves to determine a type of fault.

3. The method according to claim 2, wherein the type of fault to be determined comprises at least one of: bypass diode short circuit, module short circuit, reversed bypass diode, partial shading or soiling, change in series resistance and change in shunt resistance.

4. The method according to any of previous claims, comprising analyzing (202) the recently measured IV curve for at least one of: a single PV module, a string of PV modules, or all PV modules of the PV plant.

5. The method according to any of previous claims, further comprising normalizing the recently measured IV curves to reference ambient environment conditions.

6. The method according to any of previous claims, comprising collecting (201) and analyzing (202) the recently measured IV curve in a diagnostic module (125) within the inverter (120).

7. The method according to any of claims 1-5, comprising collecting (201) and analyzing (202) the recently measured IV curve in a diagnostic module (135) remote with respect to the inverter (120).

8. A system for monitoring a photovoltaic (PV) plant condition, wherein the PV plant (100) comprises an array (110) of PV modules (111) connected to an inverter (120) comprising a current-voltage measurement subsystem (121), a DC-AC conversion circuit (122) for providing AC power output to a power grid (150) and a control module (123) configured to control operation of the inverter (120); the system further comprising a diagnostic module (125, 126) configured to:
- collect (201) a recently measured IV curve from the measurement subsystem (121) of the inverter (120); and
- analyze (202) the recently measured IV curve to determine the condition of operation of the PV plant.

9. The system according to claim 8, wherein the diagnostic module (125) is embedded within the inverter (120).

10. The system according to claim 8, wherein the diagnostic module (125) is remote with respect to the inverter (120) and comprises a communication interface (136) configured to collect the recently measured IV curve data from a communication interface (126) of the inverter (120).
